(19) Europäisches Patentamt

European Patent Office

Office européen des brevets

(11) **EP 1 473 813 B1**

(12) **EUROPEAN PATENT SPECIFICATION**

(45) Date of publication and mention
of the grant of the patent:
**16.03.2005 Bulletin 2005/11**

(51) Int Cl.⁷: **H02J 7/00**

(21) Application number: **03009556.6**

(22) Date of filing: **28.04.2003**

(54) **Method and device for adapting a charging current in a battery charger**

Methode und Gerät zum Anpassen des Ladestromes in einem Batterieladegerät

Procédé et dispositif pour adapter le courant de charge dans un chargeur de batterie

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(43) Date of publication of application:
**03.11.2004 Bulletin 2004/45**

(73) Proprietor: **SIEMENS AKTIENGESELLSCHAFT
80333 München (DE)**

(72) Inventor: **Hoeyer, Michael
9200 Aalborg SV (DK)**

(56) References cited:
**EP-A- 0 847 123          US-A- 5 359 297
US-A- 5 646 506          US-A- 5 828 202
US-B1- 6 353 305**

**Description**

This invention relates generally to adapting a charging current, especially when an rechargeable battery is being pulse charged.

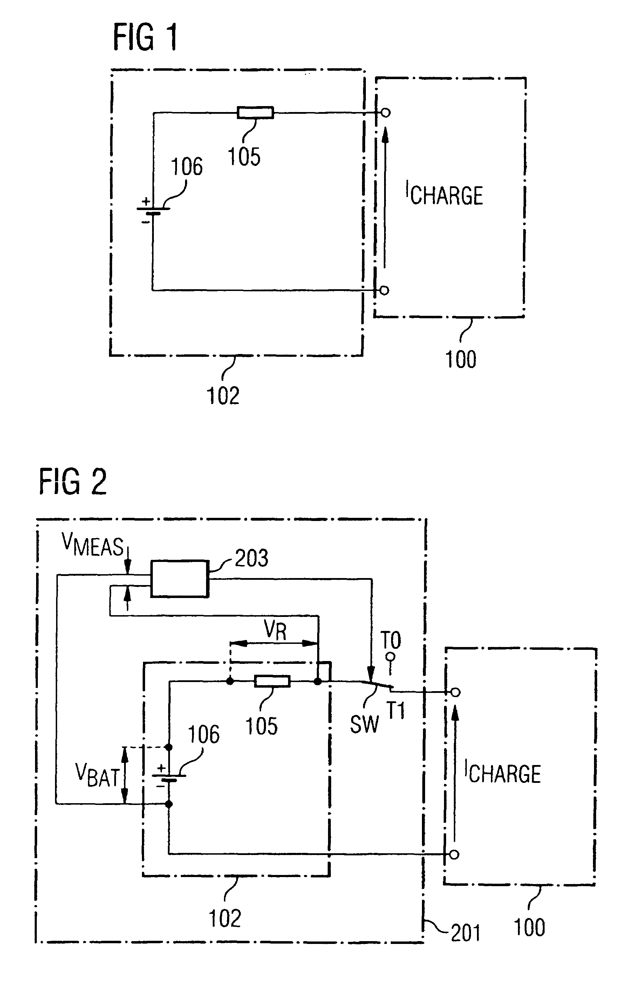

Figure 1 shows a rechargeable battery 102 which is being charged using a charger 100. The rechargeable battery 102 includes a voltage source 106 which is very usually an electrochemical voltage source. The most widespreadly used batteries in the market are Nickel-Cadmium or Lithium-Ion batteries. Any rechargeable battery 102 includes inner resistance 105. This has many causes, one of which being the wiring between the electrodes and the contacts of the rechargeable battery 102. The chemistry of the battery is the main reason for the inner resistance thus increasing proportional to the number of charge cycles of the battery. The charger 100 gives a charging current $I_{CHARGE}$ over the contacts of the rechargeable battery 102, and the charging current $I_{CHARGE}$ then charges the rechargeable battery 102. The voltage over the connectors rises steadily when the charging current $I_{CHARGE}$ is applied.

For most rechargeable batteries 102 it may happen that the voltage over the battery connectors rises above the nominal value of the battery even if the battery is not fully charged. Then the standby time of a device run by the rechargeable battery is much shorter than it would normally be with a fully charged battery. This is especially true for Lithium-Ion batteries which are effectively charged only so that the voltage is kept at the rated voltage.

The limiting of the charging current can be done by using linear regulation. However, it is not recommended in small portable devices, because it results in very high power dissipation in the charging switch, usually a transistor, which then leads to heating of the device, such as a mobile terminal. The heating of the device can be even dangerous.

Another solution to overcome the problem is to use the so called pulse charging method.

U.S. patent 5,646,506 presents a method of charging a secondary battery by applying the voltage pulses higher than a rated terminal voltage of the secondary battery at predetermined intervals so that a charging current intermittently flows through the secondary battery while the peak value or pulse width of the charging current is controlled as the voltage measured across the terminals of the secondary battery at the intervals when the voltage pulses are not applied steppedly is made higher.

Figure 2 shows a charging device 201 including pulse charging means 203. Such a device is widely used, especially in mobile terminals, and has proved to be very effective for charging Lithium-Ion batteries.

Now the pulse charging means 203, usually within the device 201, monitor the voltage $V_{MEAS}$ over the battery connectors. As soon as $V_{MEAS}$ reaches a predefined threshold value $V_{LIMIT}$, the pulse charging means 203 command the charging switch SW to change its position from terminal T1 to terminal T0 so opening the charging switch SW. This breaks the current circuit. As soon as the voltage $V_{MEAS}$ over the battery connectors drops below $V_{LIMIT}$, the pulse charging means 203 close the charging switch SW and the charging may continue.

Usually, as the charging switch SW a transistor is used. The transistor has to be chosen especially for linear regulation being able to withstand the power dissipation. From the charging control design point of view, linear regulation is not optimal. The charging transistor is normally designed as a switch regulating the charging current by switching the current to form an average charge current flow.

When charging a rechargeable battery by using a pulse charge system, the impact of the inner resistance 105 of the battery leads to a lower transfer of energy. The raise in voltage reduces the duty cycle of the charging pulse.

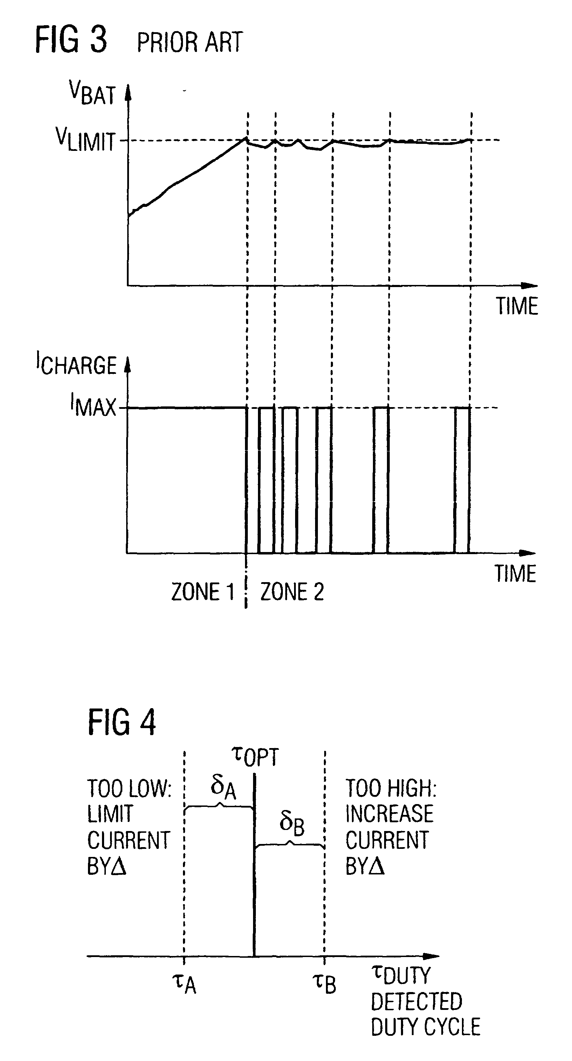

Figure 3 shows an example of pulse charging performed by a device as in Figure 2. The charger 100 has a rated voltage and source current rating. The voltage rating is normally higher than the rated battery voltage. The rated source current is normally less than or equal to the battery capacity rating in order to charge the battery within one hour. In practice, it takes 2-3 hours before the battery is fully charged.

When charging batteries, it is important that the rated voltage level of the battery is not exceeded. When a Lithium-Ion battery is discharged in a mobile handset, the typical voltage is around 3,2 V. Charging is done the first time (ZONE 1 in Figure 3) with the charging switch SW closed until the voltage $V_{MEAS} = 4,2$ V i.e. value $V_{LIMIT}$ is reached. Then (ZONE 2 in Figure 3) the pulse charging switch SW is opened until the voltage reaches a preset criteria, e.g. 0,95 * $V_{LIMIT}$, at which point the pulse charging switch SW is again closed. This kind of loop is repeated. As can be seen from Figure 3, the pausing time between the pulses increases.

The pulse charging system is usually located within the mobile device itself for simplifying the measurement of the voltage over the battery connectors. If the measurement of the voltage were performed from the charger, there should be an extra (third) wire between the charger and the rechargeable battery, provided that the rechargeable battery is located within the mobile device when it is being recharged. Further, especially for older types of rechargeable batteries, a temperature sensor is widely used in charging. This requires some complexity for the mobile device; therefore it is an economical solution to provide the pulsing mechanism in the mobile device. As already stated, the current limiter, if any, should not be located within the mobile device itself, because of heat dissipation of the charge transistor.

Prior art chargers including current limiters are as such not suitable for mobile device implemented pulse charging, because of two independent circuits. The use of a current limiter would distort the pulse charging, i.e. depending on the voltage limit concerned in the respective part, either the current limiter or the pulse charging part would not be used.

It is the main objective of the invention to bring about a method and a device with which a charging current in a charger can be adjusted in a manner compatible with existing pulse charging devices implemented with in small mobile devices, providing a faster and more thorough charging for rechargeable batteries. This and other objectives of the present invention can be achieved as described in the independent patent claims.

Another objective of the invention is to facilitate the adjustment of the charging current. This can be achieved by using a duty or pausing cycle parameter in a charging apparatus.

Another objective of the invention is to simplify the construction of a charger including current regulating means, and utilizing the current regulation in combination with pulse charging which is carried out in a mobile device. This can be achieved by using of a phase-locked loop in a charging apparatus for adjusting the charging current.

An advantage of the invention is that now the charging effectiveness is enhanced by taking into consideration the inner resistance of the battery. The current is lowered in order to achieve a longer pulse, therefore also higher power transfer to the battery is achieved due to enhanced duty cycle. This means that the system as a side effect is also able to adapt itself to the effects of ageing of the battery. Further, a battery can be fully charged; and this can be done even faster than in the present systems.

A further advantage is that the resulting devices can be made backward compatible, i.e. suitable for use in any older mobile device, especially mobile phone. On one hand, a new charger takes advantage of the built-in pulse charging system. On the other hand, it can appear just as a normal charger if the mobile device does not support pulse charging.

The dependent patent claims describe various embodiments of the present invention.

The invention and its embodiments are described more closely referring to the examples shown in Figures 4 to 8 in the appended drawings, wherein:

Figure 1 shows a rechargeable battery 102 which is being charged using a charger 100;

Figure 2 shows a device 201 including pulse charging means 203;

Figure 3 shows the time dependence of the charging current in prior art pulse charging systems typically used for small mobile devices;

Figure 4 illustrates how the charging current adaptation can be performed on some duty cycle ranges;

Figure 5 illustrates a diagram showing the principle of the invention carried out the pulse transmittal frequency used as duty cycle;

Figure 6 is a traditional phase-locked loop;

Figures 7A, 7Bshow devices used for adapting charging current;

Figure 7C shows a flow chart illustrating an embodiment of method for adapting charging current; and

Figure 8 shows the time dependence of the charging current in a charging system according to one embodiment of the present invention.

Like reference signs refer to corresponding parts and elements throughout Figures 1-8.

Figure 4 illustrates how the charging current adaptation can be performed if a detected duty cycle $\tau_{DUTY}$ is not equal to a duty cycle limit $\tau_{OPT}$. By duty cycle $\tau_{DUTY}$ can be understood to correspond to the share of time used for transmitting current from the charger to the battery. The duty cycle $\tau_{DUTY}$ can be mapped to control parameter using a suitable mapping function.

If the detected duty cycle $\tau_{DUTY}$ is higher than the duty cycle limit $\tau_{OPT}$, the current is increased. As a consequence the duty cycle $\tau_{DUTY}$ will decrease.

If the detected duty cycle $\tau_{DUTY}$ is lower than the duty cycle limit $\tau_{OPT}$ defining the optimal duty cycle, the current is reduced. Consequently, the duty cycle $\tau_{DUTY}$ increases.

In this case the mapping function can be formulated as

$$s(\tau_{DUTY}) = \begin{cases} -\Delta, & \tau_{DUTY} < \tau_{OPT} - \delta_A, \\ 0, & \tau_{OPT} - \delta_A \le \tau_{DUTY} \le \tau_{OPT} + \delta_B, \text{ and} \\ +\Delta, & \tau_{DUTY} < \tau_{OPT} + \delta_B \end{cases}$$

where $\delta_A$ and $\delta_B$ are tolerance parameters and the value $\pm \Delta$ which the feedback function s for adapting a charging current thus obtains is the step by which the current is increased or reduced. The step $\pm \Delta$ may be asymmetric; e.g. in the case where the current is to be increased i.e. the duty cycle detected is too high, the maximum current can be set. Further, $\Delta$ may be a function $\Delta := \Delta(\tau_{DUTY})$, i.e. the adjustment step depends on the duty cycle detected.

Physically, the idea of reducing the charging current leads to an increase in the duty cycle. As a consequence, the amount of charge that is input into the rechargeable battery in a time unit increases, because the inner resistance of the rechargeable battery does not dissipate that much power.

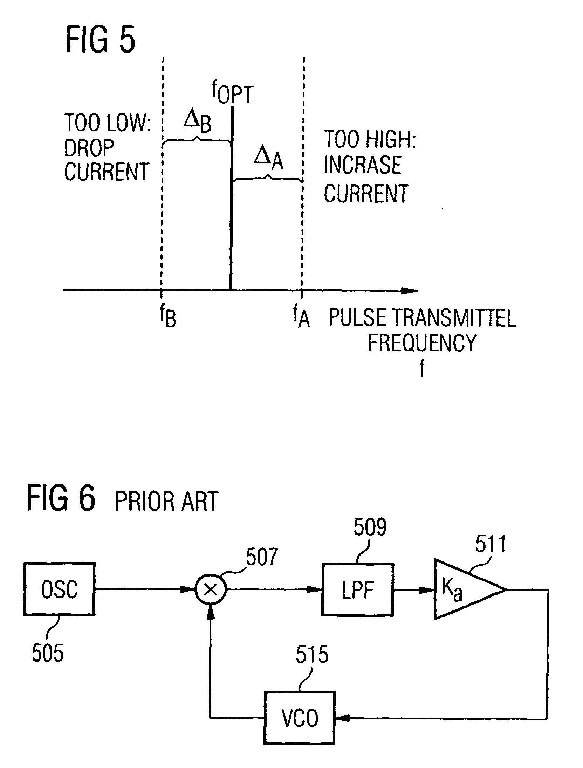

The duty cycle $\tau_{DUTY}$ need not to represent a share of time. It can represent a frequency in which current pulses are transmitted from the charger. This is illustrated in Figure 5 where the pulse transmittal frequency $f$ is used as duty cycle. Now it is assumed that the pulse duration $t_p$ controlled the mobile device remains constant. For continuous current, the pulse transmittal frequency $f = 1/t_p$. When the current limit has been reached, the pulse frequency falls below lower limit $f_B$ and the current is reduced.

The charge current limiter can used to give a full current despite the maximum connector voltage has been reached, i.e. the charging is now in Zone 2. The higher pulse transmittal frequency limit $f_A$ can namely be set close to $f_B$ by letting the $\Delta_A$ and $\Delta_B$ approach zero. If the pulsing circuitry tries to insist continuous current inside Zone 2, the current can be set to allowed maximum value. The above presentation for $s(\tau)$ is perfectly valid, now $\tau_{DUTY}$ being replaced with the pulse transmittal frequency $f$.

In analogy, it follows that the control function $s(\tau_{DUTY})$ can also be written in a form wherein the duty cycle corresponds to the duration of current pulses transmitted to the battery.

Further, instead of duty cycle, pausing cycle can be used. Pausing cycle can be understood to correspond to the share of time not used for transmitting current from the charger to the battery. In other words, $\tau_{TOTAL} = \tau_{DUTY} + \tau_{PAUSING}$. If parameters are normalized, then $\tau_{TOTAL} = 1$, whereas for $0 \le \tau_{DUTY} \le 1$, and $\tau_{PAUSING} = 1 - \tau_{DUTY}$. Then the mapping function has to be reformulated, i.e.

$$s(\tau_{PAUSING}) = \begin{cases} -\Delta, & \tau_{PAUSING} > \tau_{OPT} + \delta_B, \\ 0, & \tau_{OPT} - \delta_A \le \tau_{PAUSING} \le \tau_{OPT} + \delta_B, \text{ and} \\ +\Delta, & \tau_{PAUSING} < \tau_{OPT} - \delta_A. \end{cases}$$

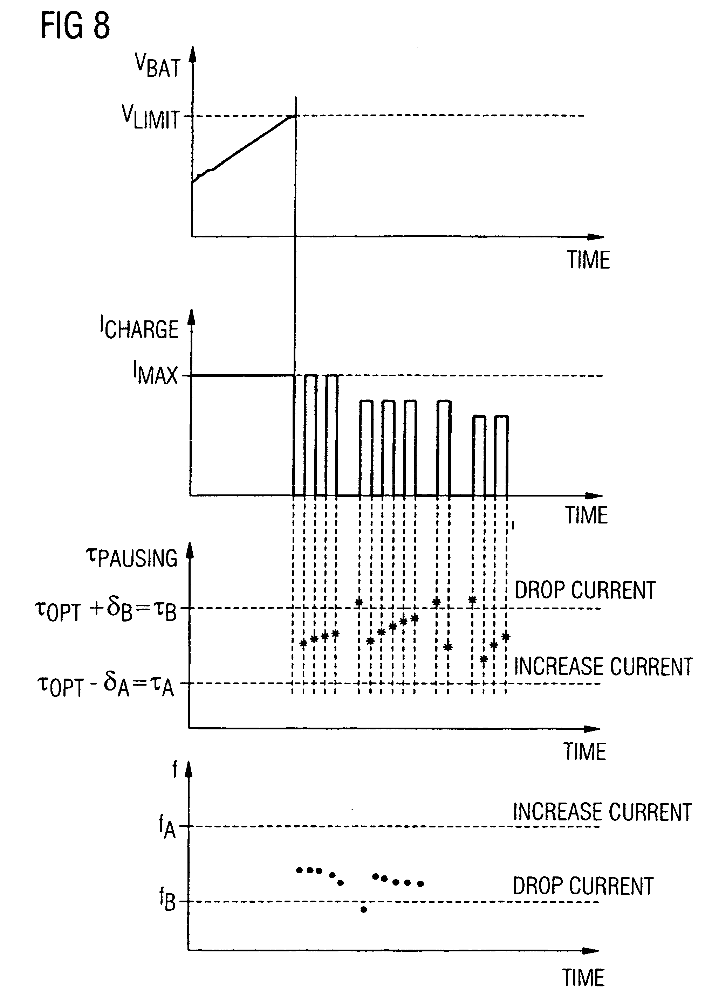

In other words, the feature that the charging current is reduced to raise to duty cycle or increased to drop the duty cycle is replaced with the feature that the charging current is reduced to drop the pausing cycle, or increased to raise the pausing cycle. This is further illustrated in Figure 8.

Instead of frequency in which current pulses are transmitted from the charger, the frequency in which the transmitting of current pulses from the charger is ended can be used. Then the above control function for $s(\tau_{PAUSING})$ is valid.

In analogy, it follows that the control function $s(\tau_{PAUSING})$ can also be written so that the pausing cycle corresponds to the duration of pauses between current pulses transmitted to the battery.

It is clear that any parameters can but need not be obtained between two consecutive pulses or pauses, but a deliberate number of pulses and/or pauses can be used to obtain the suitable parameter for the control function s. Especially averaging from a set of measurement values, wherefrom the extreme (highest and/or lowest) values can further be singled out before computation in order to smoothen results.

The parameters representing the duty cycle or pausing cycle can be derived from a voltage or current in a power part of the charger. Alternatively, they can be derived from the information received from a device pulse charging a rechargeable battery. In the case of a mobile device, say a mobile phone, the battery which is being charged is located in the mobile device which is giving the pulsing commands.

This information, such as information necessary for defining any of the above described, can then be signalled to the charger. Possible communication means include elecrical, optical, magnetical, or radio communication means. For example, the start and/or end of each pulse can be signalled optically by blinking a light, such as a LED, or using BLUETOOTH, or by a separate signalling wire. This signalling is preferably then somehow detected in the receiving end, i.e. in the charger, in practice by using responsive receiving means. Then the detected duty or pausing cycle is used to control the charging current in the manner above described.

Alternatively, the mobile device itself can be further used to compute the detected duty cycle, and then transmit this information to the charger in the manner above described.

Figure 6 is a circuit representing a phase-locked loop. The idea is to tune the voltage controlled oscillator VCO 515 by using an oscillator 505. The difference output signal of a multiplexer 507 is low-passed in a low pass filter 509 and then amplified in the amplifier 511. The output of the amplifier 515 is then used to keep the VCO 515 locked in the same frequency.

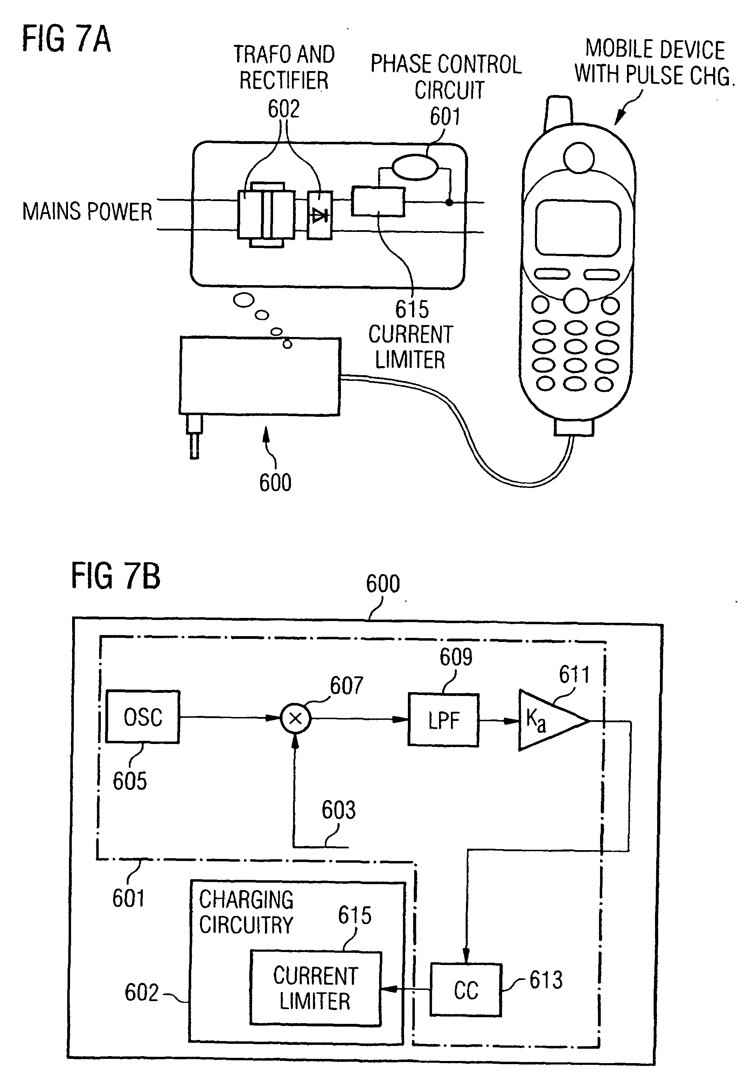

Figure 7A shows a charger 600 according to one embodiment of the present invention. The idea is to equip the charger 600 with a phase locked loop principle control circuit 601. When the mobile device, such as a mobile phone or other terminal, demands direct current without pulsing, the charger 600 delivers it with the highest possible charge current. When entering the pulse charging state (Zone 2), the current limit of the charger 600 is frozen until the duty cycle falls below a predefined threshold showing that there is more pausing than charging.

The duty cycle is monitored by the phase control circuit 601 of which one example is in more detail worked out in Figure 7B. If the phase control circuit 601 notes that there is more pausing than charging, the current limit of the charger 600 is lowered by using a current limiter 615, having the effect that the duty cycle again increases. The step of lowering the current limit is repeated when duty cycle decreases, until no lower current limit is any more available. The number of required levels for the current limiter 615 in the charger can be chosen by the designer. In practice, 3 or 4 levels will be sufficient.

Preferably, the current limiter 615 and phase control circuit 601 are located after the transformer and rectifier (both noted with reference numeral 602 in Figure 7A).

Compared to linear regulation performed in the mobile device, the same effect can now be achieved by controlling the current limiter in the charger. The result is that the regulation power is now dissipated in the charger and not in the mobile device. Because a normal charger is already equipped with a current limiter, the adding of such a phase control circuit having an interface to the current limiter circuit suffices. The phase-locked loop or control circuit can be implemented in the same ASIC or chip as the current controller. Because such a control mechanism is relatively simple, it can be a simple state machine, thus there being no need for a micro controller, hence ensuring lower design and manufacture cost.

Figure 7B shows a phase-locked loop 601 for a charging system 600 including a current limiter 615, when the charging circuitry 602 is further connected to a pulsing system. Now the pulse frequency $f$ can be detected using a sensor 603. This pulse frequency $f$ is compared in the multiplexer 607 with the optimal pulse frequency coming from the oscillator 605. The multiplexed signal is then low-pass filtered in the low-pass filter 609 and amplified in the amplifier 611. The output of the amplifier is then passed to the control circuit 613 which controls the current limiter 615 in the charging circuitry 602, performing the control function $s(\tau)$ as discussed above.

The sensor used to detect the duty cycle can be a simple wiring connected to the power regulator. Alternatively, if the charging system 600 includes more complicated electronics, such as a timer, the system can detect the duty cycle $\tau_{DUTY}$ or pausing cycle $\tau_{PAUSING}$ using an integrator circuitry. Alternatively, the timer can be replaced with a direct integrator, such as a capacitance, the voltage of which then corresponds the duty cycle $\tau_{DUTY}$.

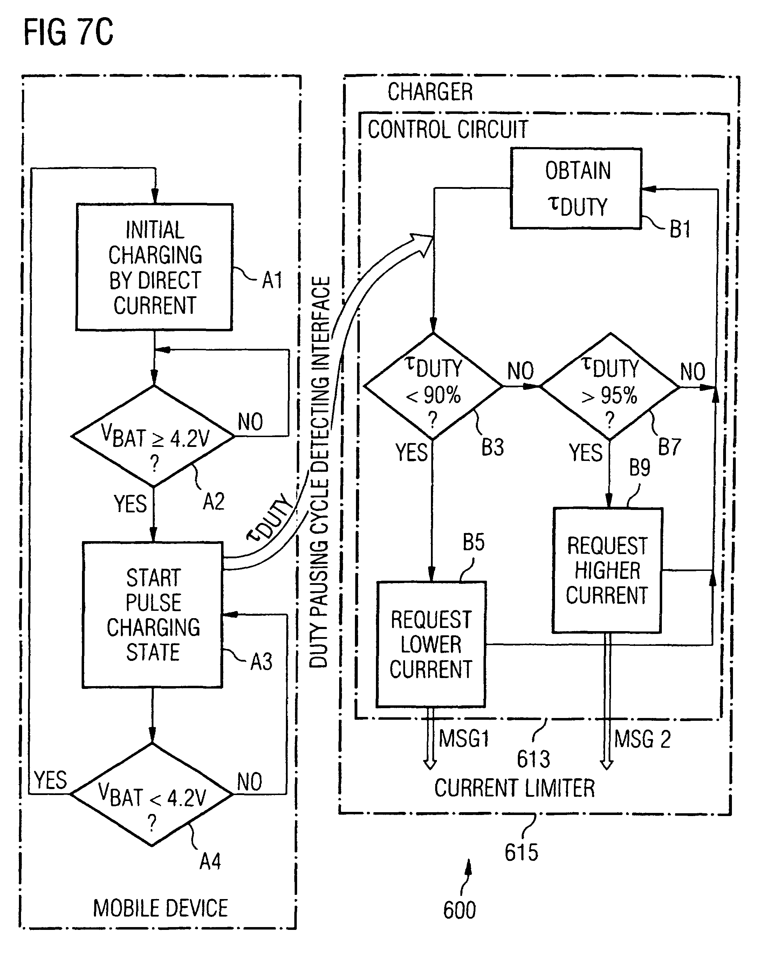

Figure 7C is a block diagram illustrating the operation of a device according to the present invention, such as that of Figure 7A or 7B. The dashed box on the left illustrates steps performed in the mobile device. First, when charging is begun, in step A1 the charging switch SW is closed. This corresponds to initial charging by direct current. The pulse charging circuitry in the mobile device constantly evaluates (step A2) if the voltage between battery $V_{BAT}$ connectors is equal to or exceeds the nominal voltage of the battery. For a Lithium-Ion battery this would correspond to 4.2 V. This corresponds to charging in ZONE 1.

When the nominal voltage of the battery has been detected by the pulse charging circuitry of the mobile device, the pulse charging circuitry enters to step A3 corresponding to ZONE 2 of previous considerations. In step A3 pulse charging state is started.

The pulse charging circuitry then constantly checks (step A4) if the nominal voltage of the battery is higher than the measured voltage. This kind of voltage drop may correspond to a situation when the charger can not keep the mobile device alive without using the energy from the battery, such as when the mobile device is used for radio communications suddenly increasing the power consumption. Then the mobile device returns to initial charging i.e. back to step A1.

The actions defining duty cycle $\tau_{DUTY}$ and pausing cycle $\tau_{PAUSING}$ are thus decided in the mobile device. The duty cycle $\tau_{DUTY}$ or pausing cycle $\tau_{PAUSING}$ can further be calculated in the mobile device. This is nevertheless not necessary, because, as already described, it can be detected in the charger 600 as well. In other words, the effect of pulsing performed by the mobile device is detected (step B1) in the charger 600, in the present example in the control circuit 613.

The duty cycle $\tau_{DUTY}$ is then in step B3 compared with a lower duty cycle limit (example value is 90%). If the lower duty cycle limit is larger than the duty cycle $\tau_{DUTY}$, in step B5 the control circuit 613 requests lower current from the current limiter 615 by sending message MSG1 which can be a control voltage.

The duty cycle $\tau_{DUTY}$ is compared (step B7) also with a higher duty cycle limit (example value is 95%). If the duty cycle exceeds the higher duty cycle limit, then in step B9 higher current is requested from the current limiter 615 by sending message MSG2 which can be a control voltage. This is analogous to the pulsing circuitry of the mobile device changing from pulse charging (step A3) back to direct current (A1) in the case where the current consumption is higher, such as when the current from the charger would not keep the device alive without using the energy from the battery.

Each of steps B5, B7, or B9 finally loop back to step B1, where a new duty cycle $\tau_{DUTY}$ is obtained.

Figure 8 visualizes one possible usage scenario and how each parameter can be obtained. As already discussed, the relation between different parameters, duty cycle $\tau_{DUTY}$, pausing cycle $\tau_{PAUSING}$, and different durations or frequencies, is clear for the skilled person.

According to one embodiment of the present invention, the charging current in a charger connected to a device including pulse charging means and a battery that is being charged can be adjusted by i) detecting a beginning and/or end of a charging pulse; ii) generating a detection signal; iii) deriving a parameter (p) depending on a frequency (f) on which detection signals are generated; iv) comparing said parameter (p) to a first predefined value ($p_A$) thus producing a first comparison result; and v) controlling the charging current by: 1) decreasing the charging current, if the first comparison result shows that the frequency (f) has a value lower than a lower limit ($f_B$) of the frequency; and/or 2) increasing the charging current, if the first comparison result shows that the frequency (f) has a value greater than an upper limit ($f_A$) of the frequency.

Further, said parameter (p) can be compared with a second predefined value ($p_B$) different to the first threshold value thus producing a second comparison result. Then the charging current is adjusted by: 1) decreasing the charging current, if the second comparison result shows that the frequency (f) has a value lower than a lower limit ($f_B$) of the frequency; or 2) increasing the charging current, if the second comparison result shows that the frequency (f) has a value greater than an upper limit ($f_A$) of the frequency.

The parameter (p) may be estimated from at least two consecutive detection signals. Especially, the parameter (p) may be the frequency (f) on which detection signals are generated, or the time ($\tau$) between at least two consecutive detection signals.

The detection signal may correspond to beginning or an end of a charging pulse.

The first detecting step may include detecting an effect caused on the charger 600 by the pulse charging means 103.

## Claims

1. A charger (600) comprising means (615) for adapting a charging current ($I_{CHARGE}$), **characterized in that:** when the charger (600) is used for pulse charging (ZONE 2) instead of continuous charging (ZONE 1), said means (615) for adapting the charging current are responsive to means (603, 605, 607, 609, 611) for comparing the duty cycle of current pulses with a predefined threshold ($\tau_{OPT}$), and further adapted to:

   - limit the charging current ($I_{CHARGE}$) by a predefined quantity ($\Delta$) when the duty cycle of current pulses is below the predefined threshold ($\tau_{OPT}$); or
   - increase the charging current ($I_{CHARGE}$) by a predefined quantity ($\Delta$) when the duty cycle of current pulses is above the predefined threshold ($\tau_{OPT}$).

2. A charger (600) of claim 1, **wherein:** the said predefined threshold ($\tau_{OPT}$) is higher at the upper limit ($\tau_B$) than at the lower limit ($\tau_A$).

3. A charger (600) of claim 1 or 2, **wherein:** the said predefined quantity ($\Delta$) has a different magnitude for limiting the charging current and for increasing the charging current.

**4.** A charger (600) according to claim 1, 2, or 3, **wherein**: the duty cycle is derived from a voltage or current in a power part (615) of the charger (600).

**5.** A charger (600) according to any one of claims 1 to 3, further **comprising**: means for receiving information for deriving the duty cycle from a mobile device that is pulse charging a rechargeable battery.

**6.** A charger (600) according to any one of claims 1 to 3, further **comprising**: means for receiving the duty cycle computed by a mobile device that is pulse charging a rechargeable battery.

**7.** A charger (600) according to any one of claims 1 to 6, **wherein**: the duty cycle represents the share of time used for transmitting current, or any figure derived therefrom.

**8.** A charger (600) according to any one of claims 1 to 6, **wherein**: the duty cycle represents a frequency in which current pulses are transmitted from the charger.

**9.** A charger (600) according to any one of claims 1 to 6, **wherein**: the duty cycle represents the duration of current pulses transmitted from the charger.

**10.** A charger (600) according to any one of preceding claims 1 to 9, **wherein:** the said means (603, 605, 607, 609, 611) for comparing the duty cycle of current pulses with a predefined threshold ($\tau_{OPT}$) form a phase-locked-loop.

**11.** A method for adapting a charging current ($I_{CHARGE}$) in a charger (600) used to provide a mobile device charging a rechargeable battery (100) with current, the mobile device comprising means (SW) for switching between continuous charging (ZONE 1) and pulse charging (ZONE 2),
**characterized in that:** the charging current ($I_{CHARGE}$) is:

- limited with a predefined quantity ($\Delta$) when the duty cycle of current pulses is below a predefined threshold ($\tau_{OPT}$) ; or
- increased with a predefined quantity ($\Delta$) when the duty cycle of current pulses is above a predefined threshold ($\tau_{OPT}$).

**12.** A method of claim 11, **wherein:** the said predefined threshold ($\tau_{OPT}$) is higher at the upper limit ($\tau_B$) than at the lower limit ($\tau_A$).

**13.** A method of claim 11 or 12, **wherein:** the said predefined quantity ($\Delta$) has a different magnitude for limiting the charging current and for increasing the charging current.

**14.** A method according to claim 11, 12, or 13, **wherein**: the duty cycle is derived from a voltage or current in a power part (615) of the charger (600).

**15.** A method according to any one of claims 11 to 13, **wherein**: the duty cycle is derived from information received from the mobile device.

**16.** A method according to any one of claims 11 to 13, **wherein**: the duty cycle is computed by the mobile device.

**17.** A method according to any one of claims 11 to 16, **wherein**: the duty cycle represents the share of time used for transmitting current, or any figure derived therefrom.

**18.** A method according to any one of claims 11 to 16, **wherein:** the duty cycle represents a frequency in which current pulses are transmitted from the charger.

**19.** A method according to any one of claims 11 to 16, **wherein**: the duty cycle represents the duration of current pulses transmitted from the charger.

**Patentansprüche**

**1.** Ladegerät (600), welches Mittel (615) zum Anpassen eines Ladestroms ($I_{LADUNG}$) umfasst, **dadurch gekenn-**

**zeichnet, dass:** wenn das Ladegerät (600) zur Impulsladung (BEREICH 2) anstatt zum kontinuierlichen Laden (BEREICH 1) verwendet wird, die besagten Mittel (615) zum Anpassen des Ladestroms auf Mittel (603, 605, 607, 609, 611) zum Vergleichen des Arbeitszyklus von Stromimpulsen mit einem vorgegebenen Schwellwert ($\tau_{OPT}$) reagieren und ferner so beschaffen sind, dass sie:

- den Ladestrom ($I_{LADUNG}$) um eine vorgegebene Größe ($\Delta$) begrenzen, wenn der Arbeitszyklus der Stromimpulse unter dem vorgegebenen Schwellwert ($\tau_{OPT}$) liegt; oder
- den Ladestrom ($I_{LADUNG}$) um eine vorgegebene Größe ($\Delta$) erhöhen, wenn der Arbeitszyklus der Stromimpulse über dem vorgegebenen Schwellwert ($\tau_{OPT}$) liegt.

2. Ladegerät (600) nach Anspruch 1, **wobei:** der besagte vorgegebene Schwellwert ($\tau_{OPT}$) am oberen Grenzwert ($\tau_B$) höher ist als am unteren Grenzwert ($\tau_A$).

3. Ladegerät (600) nach Anspruch 1 oder 2, **wobei:** die besagte vorgegebene Größe ($\Delta$) unterschiedliche Werte für das Begrenzen des Ladestroms und für das Erhöhen des Ladestroms hat.

4. Ladegerät (600) nach Anspruch 1, 2 oder 3, **wobei**: der Arbeitszyklus von einer Spannung oder einem Strom in einem Leistungsteil (615) des Ladegeräts (600) abgeleitet wird.

5. Ladegerät (600) nach einem der Ansprüche 1 bis 3, welches ferner **umfasst:** Mittel zum Empfangen von Informationen zum Ableiten des Arbeitszyklus von einem mobilen Gerät, welches eine wiederaufladbare Batterie mittels Impulsladung lädt.

6. Ladegerät (600) nach einem der Ansprüche 1 bis 3, welches ferner **umfasst**: Mittel zum Empfangen des Arbeitszyklus, der von einem mobilen Gerät berechnet wurde, welches eine wiederaufladbare Batterie mittels Impulsladung lädt.

7. Ladegerät (600) nach einem der Ansprüche 1 bis 6, wobei: der Arbeitszyklus den Zeitanteil darstellt, der zum Übertragen von Strom verwendet wird, oder irgendeinen davon abgeleiteten Wert.

8. Ladegerät (600) nach einem der Ansprüche 1 bis 6, wobei: der Arbeitszyklus eine Frequenz darstellt, mit welcher Stromimpulse vom Ladegerät übertragen werden.

9. Ladegerät (600) nach einem der Ansprüche 1 bis 6, wobei: der Arbeitszyklus die Dauer von Stromimpulsen darstellt, die vom Ladegerät übertragen werden.

10. Ladegerät (600) nach einem der vorhergehenden Ansprüche 1 bis 9, **wobei**: die besagten Mittel (603, 605, 607, 609, 611) zum Vergleichen des Arbeitszyklus von Stromimpulsen mit einem vorgegebenen Schwellwert ($\tau_{OPT}$) eine phasenstarre Regelschleife bilden.

11. Verfahren zum Anpassen eines Ladestroms ($I_{LADUNG}$) in einem Ladegerät (600), das verwendet wird, um ein mobiles Gerät, das eine wiederaufladbare Batterie (100) lädt, mit Strom zu versorgen, wobei das mobile Gerät Mittel (SW) zum Umschalten zwischen kontinuierlichem Laden (BEREICH 1) und Impulsladung (BEREICH 2) umfasst, **dadurch gekennzeichnet, dass:** der Ladestrom ($I_{LADUNG}$) :

- um eine vorgegebene Größe ($\Delta$) begrenzt wird, wenn der Arbeitszyklus der Stromimpulse unter einem vorgegebenen Schwellwert ($\tau_{OPT}$) liegt; oder
- um eine vorgegebene Größe ($\Delta$) erhöht wird, wenn der Arbeitszyklus der Stromimpulse über einem vorgegebenen Schwellwert ($\tau_{OPT}$) liegt.

12. Verfahren nach Anspruch 11, **wobei:** der besagte vorgegebene Schwellwert ($\tau_{OPT}$) am oberen Grenzwert ($\tau_B$) höher ist als am unteren Grenzwert ($\tau_A$).

13. Verfahren nach Anspruch 11 oder 12, **wobei:** die besagte vorgegebene Größe ($\Delta$) unterschiedliche Werte für das Begrenzen des Ladestroms und für das Erhöhen des Ladestroms hat.

14. Verfahren nach Anspruch 11, 12 oder 13, **wobei**: der Arbeitszyklus von einer Spannung oder einem Strom in einem Leistungsteil (615) des Ladegeräts (600) abgeleitet wird.

**15.** Verfahren nach einem der Ansprüche 11 bis 13, **wobei**: der Arbeitszyklus aus Informationen abgeleitet wird, die von dem mobilen Gerät empfangen werden.

**16.** Verfahren nach einem der Ansprüche 11 bis 13, **wobei**: der Arbeitszyklus von dem mobilen Gerät berechnet wird.

**17.** Verfahren nach einem der Ansprüche 11 bis 16, **wobei**: der Arbeitszyklus den Zeitanteil darstellt, der zum Übertragen von Strom verwendet wird, oder irgendeinen davon abgeleiteten Wert.

**18.** Verfahren nach einem der Ansprüche 11 bis 16, **wobei**: der Arbeitszyklus eine Frequenz darstellt, mit welcher Stromimpulse vom Ladegerät übertragen werden.

**19.** Verfahren nach einem der Ansprüche 11 bis 16, **wobei**: der Arbeitszyklus die Dauer von Stromimpulsen darstellt, die vom Ladegerät übertragen werden.

## Revendications

**1.** Chargeur (600) comprenant un moyen (615) pour adapter un courant de charge ($I_{CHARGE}$), **caractérisé en ce que** : lorsque le chargeur (600) est utilisé pour une charge par impulsions (ZONE 2) au lieu d'une charge continue (ZONE 1), ledit moyen (615) pour adapter le courant de charge est sensible à des moyens (603, 605, 607, 609, 611) pour comparer le rapport cyclique des impulsions de courant à un seuil prédéfini ($\tau_{OPT}$), et étant adapté en outre pour:

- limiter le courant de charge ($I_{CHARGE}$) d'une quantité prédéfinie ($\Delta$) lorsque le rapport cyclique des impulsions de courant est inférieur au seuil prédéfini ($\tau_{OPT}$); ou
- augmenter le courant de charge ($I_{CHARGE}$) d'une quantité prédéfinie ($\Delta$) lorsque le rapport cyclique des impulsions de courant est supérieur au seuil prédéfini ($\tau_{OPT}$).

**2.** Chargeur (600) selon la revendication 1, dans lequel : ledit seuil prédéfini ($\tau_{OPT}$) est plus haut à la limite supérieure ($\tau_B$) qu'à la limite inférieure ($\tau_A$).

**3.** Chargeur (600) selon la revendication 1 ou 2, dans lequel : ladite quantité prédéfinie ($\Delta$) a une magnitude différente pour limiter le courant de charge et pour augmenter le courant de charge.

**4.** Chargeur (600) selon la revendication 1, 2 ou 3, dans lequel : le rapport cyclique est dérivé d'une tension ou d'un courant dans une partie de puissance (615) du chargeur (600).

**5.** Chargeur (600) selon l'une quelconque des revendications 1 à 3, comprenant en outre : un moyen pour recevoir des informations pour dériver le rapport cyclique à partir d'un dispositif mobile qui charge par impulsions une batterie rechargeable.

**6.** Chargeur (600) selon l'une quelconque des revendications 1 à 3, comprenant en outre : un moyen pour recevoir le rapport cyclique calculé par un dispositif mobile qui charge par impulsions une batterie rechargeable.

**7.** Chargeur (600) selon l'une quelconque des revendications 1 à 6, dans lequel : le rapport cyclique représente le partage de temps utilisé pour transmettre un courant, ou toute caractéristique dérivée de celui-ci.

**8.** Chargeur (600) selon l'une quelconque des revendications 1 à 6, dans lequel : le rapport cyclique représente une fréquence avec laquelle les impulsions de courant sont transmises à partir du chargeur.

**9.** Chargeur (600) selon l'une quelconque des revendications 1 à 6, dans lequel : le rapport cyclique représente la durée des impulsions de courant transmises à partir du chargeur.

**10.** Chargeur (600) selon l'une quelconque des revendications précédentes 1 à 9, dans lequel : lesdits moyens (603, 605, 607, 609, 611 ) pour comparer le rapport cyclique des impulsions de courant à un seuil prédéfini ($\tau_{OPT}$) forment une boucle verrouillée en phase.

**11.** Procédé d'adaptation d'un courant de charge ($I_{CHARGE}$) dans un chargeur (600) utilisé pour alimenter en courant un dispositif mobile chargeant une batterie rechargeable (100), le dispositif mobile comprenant un moyen (SW) pour effectuer une commutation entre une charge continue (ZONE 1) et une charge par impulsions (ZONE 2), **caractérisé en ce que**: le courant de charge ($I_{CHARGE}$) est :

- limité avec une quantité prédéfinie ($\Delta$) lorsque le rapport cyclique des impulsions de courant est inférieur à un seuil prédéfini ($\tau_{OPT}$); ou
- augmenté avec une quantité prédéfinie ($\Delta$) lorsque le rapport cyclique des impulsions de courant est supérieur à un seuil prédéfini ($\tau_{OPT}$).

12. Procédé selon la revendication 11, dans lequel : ledit seuil prédéfini ($\tau_{OPT}$) est plus haut à la limite supérieure ($\tau_B$) qu'à la limite inférieure ($\tau_A$).

13. Procédé selon la revendication 11 ou 12, dans lequel : ladite quantité prédéfinie ($\Delta$) a une magnitude différente pour limiter le courant de charge et pour augmenter le courant de charge.

14. Procédé selon la revendication 11, 12 ou 13, dans lequel : le rapport cyclique est dérivé d'une tension ou d'un courant dans une partie de puissance (615) du chargeur (600).

15. Procédé selon l'une quelconque des revendications 11 à 13, dans lequel : le rapport cyclique est dérivé des informations reçues du dispositif mobile.

16. Procédé selon l'une quelconque des revendications 11 à 13, dans lequel : le rapport cyclique est calculé par le dispositif mobile.

17. Procédé selon l'une quelconque des revendications 11 à 16, dans lequel : le rapport cyclique représente le partage de temps utilisé pour transmettre le courant, ou toute caractéristique dérivée de celui-ci.

18. Procédé selon l'une quelconque des revendications 11 à 16, dans lequel : le rapport cyclique représente une fréquence avec laquelle les impulsions de courant sont transmises depuis le chargeur.

19. Procédé selon l'une quelconque des revendications 11 à 16, dans lequel : le rapport cyclique représente la durée des impulsions de courant transmises depuis le chargeur.

## FIG 1

106

105

$I_{CHARGE}$

102

100

## FIG 2

$V_{MEAS}$

203

$V_R$

T0

105

SW    T1

106

$V_{BAT}$

$I_{CHARGE}$

102

201    100

## FIG 3 PRIOR ART

$V_{BAT}$

$V_{LIMIT}$

TIME

$I_{CHARGE}$

$I_{MAX}$

TIME

ZONE 1 | ZONE 2

## FIG 4

$\tau_{OPT}$

TOO LOW:
LIMIT
CURRENT
BY $\Delta$

$\delta_A$

$\delta_B$

TOO HIGH:
INCREASE
CURRENT
BY $\Delta$

$\tau_A$

$\tau_B$

$\tau_{DUTY}$
DETECTED
DUTY CYCLE

12

# FIG 5

TOO LOW:
DROP
CURRENT

$f_{OPT}$

$\Delta_B$

$\Delta_A$

TOO HIGH:
INCRASE
CURRENT

$f_B$        $f_A$    PULSE TRANSMITTEL
FREQUENCY
f

# FIG 6 PRIOR ART

OSC

505

507

×

509

LPF

511

$K_a$

515

VCO

## FIG 7A

TRAFO AND
RECTIFIER
602

PHASE CONTROL
CIRCUIT
601

MOBILE DEVICE
WITH PULSE CHG.

MAINS POWER

615
CURRENT
LIMITER

600

## FIG 7B

600

OSC

605

607

609
LPF

611
$K_a$

603

601

CHARGING
CIRCUITRY

615

602

CURRENT
LIMITER

CC

613

EP 1 473 813 B1

# FIG 7C

15

# FIG 8